# EUROPÄISCHE PATENTSCHRIFT

(11) **EP 0 588 778 B1**
(45) Veröffentlichungstag und Bekanntmachung des Hinweises auf die Patenterteilung: **09.10.1996**
(21) Anmeldenummer: 93890155.0
(22) Anmeldetag: 17.08.1993
(51) Int. Cl.: C02F 9/00, B01D 17/02, B01D 61/16

(54) **Anlage zur Reinigung von Waschwasser, insbesondere bei Fahrzeugwaschanlagen**
Installation for purification of wash water, especially in vehicle washing installations
Installation pour la purification d'eau de lavage, particulièrement dans les installations de lavage de véhicules

(30) Priorität: 18.09.1992 AT 1863/92
(43) Veröffentlichungstag der Anmeldung: 23.03.1994
(73) Patentinhaber: FIRMA JOHANN FIEDLER, A-4052 Ansfelden (AT)
(72) Erfinder: Fiedler, Johann, A-4052 Ansfelden (AT)
(74) Vertreter: Hübscher, Heiner, Dipl.-Ing.

(56) Entgegenhaltungen:
- EP-A- 0 433 200
- DE-A- 2 941 164
- FR-A- 2 143 331
- FR-A- 2 389 400
- GB-A- 2 198 431

## Beschreibung

Die Erfindung betrifft eine Anlage zur Reinigung von Waschwasser, insbesondere bei Fahrzeugwaschanlagen nach dem Oberbegriff des Patentanspruches 1.

Entsprechende Anlagen sind bei Waschständen und Waschstraßen für Kraftfahrzeuge vorgeschrieben, um Umweltverschmutzungen durch im Waschwasser enthaltene schädliche Stoffe und Überbelastungen der Kläranlagen zu vermeiden. Es ist bisher nämlich üblich, das über einen Ölabscheider und eine Abscheide-Vorrichtung für grobe Rückstände nur teilweise vorgereinigte Wasser in den Kanal ablaufen zu lassen. Eine entsprechende Vorgangsweise ist aber sowohl aus Kostengründen für die Beschaffung des frischen Waschwassers als auch aus Gründen des Umweltschutzes bedenklich.

Aus der GB-A-2 198 431 ist ein Ölabscheider bekannt, der vor allem für Erdölgewinnungsanlagen, insbesondere Bohrinseln bestimmt ist und dessen Hauptaufgabe in der Wiedergewinnung von Erdöl besteht, das mit Wasser vermischt wurde oder z. B. bei einer Bohrinsel in das Wasser ausgetreten ist. Dieser bekannte Ölabscheider arbeitet mit einem in mehrere Kammern unterteilten Durchlauftank von relativ großem Volumen, bei dem zunächst in einer ersten Kammer am oberen Rand einer nicht ganz bis zur Decke reichenden Trennwand ein Vorabscheider für aufschwimmendes Öl vorgesehen ist. An diese Kammer schließen nach der Trennwand zwei oder mehrere Reaktionskammern an, denen das verunreinigte Wasser nacheinander zugeführt wird. Jede Reaktionskammer besitzt eine Belüftungs- oder Begasungsvorrichtung mit einer Tauchturbine, die angesaugte Luft in Bodennähe in Form feiner Perlen in die in der Kammer befindliche Flüssigkeit leitet. Zweck dieser Maßnahme ist es, durch Anlagerung der Luft- oder Gasperlen an Erdölpartikel einen Schaum zu erzeugen, der aufschwimmt und wieder über nicht ganz bis zur Decke reichende Trennwände an Schaumsammelvorrichtungen oder -schächte abgegeben wird, in denen eine Entgasung erfolgt und das so erhaltene Erdöl aufgefangen und abgeleitet wird. Der Auslaß aus der letzten Reaktionskammer erfolgt über einen Syphon, um zu gewährleisten, daß aufschwimmende Ölrückstände in der letzten Reaktionskammer zurückgehalten werden. Bei einer Anlage der eingangs genannten Art wäre ein derartiger Ölabscheider sowohl wegen der erforderlichen Baugröße als auch wegen der Tatsache unbrauchbar, daß mit einem entsprechenden Abscheider das Problem der Abtrennung feiner Verunreinigungen z. B. Schmutzteilchen nicht lösbar ist.

Aufgabe der Erfindung ist die Schaffung einer Anlage nach dem Oberbegriff des Anspruches 1, bei relativ einfachem Aufbau und einfacher Bedienbarkeit eine ausreichende Reinigung des Waschwassers ermöglicht, um dessen unbedenkliche Wiederverwendung als Reinwasser beim nächsten Waschvorgang der entsprechenden Waschanlage zu gestatten.

Die gestellte Aufgabe wird prinzipiell durch die Merkmale des Patentanspruches 1 gelöst.

Beim Betrieb zeigt sich überraschend, daß durch die intensive Belüftung des grob vorgereinigten Waschwassers eine Aufbreitung des Waschwassers stattfindet, die auf verschiedenen Ebenen wirkt. Zunächst werden unter der Belüftung flüchtige und im Waschwasser nur angelagerte Stoffe ausgetrieben. Ganz wesentlich ist aber, daß fein verteilte Verunreinigungen, die bisher von einem wirtschaftlich ausgelegten Feinfilter nicht erfaßt werden konnten, teilweise ausgefällt oder zu größeren Klumpen vereinigt werden, so daß ihre Ausfilterung im Mikrofilter möglich wird. Jedenfalls ist es möglich, derartigen Verunreinigungen eine Konsistenz zu geben, die ihre Ausfilterung aus dem Wasser zuläßt, wobei wegen der Rückführung des Filterkonzentrates zum Ölabscheider die ensprechenden Verunreinigungen gegebenenfalls zum Großteil im Ölabscheider und einer nachgeordneten Grobabscheidevorrichtung abgeschieden werden, zumindest aber nach mehrmaligem Durchlaufen des Filters so an andere abzuscheidende Teilchen gebunden sind, daß sie spätestens im Ölfilter oder dem Grobabscheider ausfallen. Es findet auch teilweise eine Oxidierung unerwünschter und sich bisher der Ausfilterung widersetzender Stoffe statt. Schließlich findet dadurch, daß der Wasserauslaß des Mikrofilters über einen Kohlefilter mit dem Vorratsbehälter für das Reinwasser verbunden wird, im Kohlefilter auch eine Abscheidung jener Reste von geruchsbildenden Substanzen statt, die sonst eine Wiederverwendung des gereinigten Wassers in der Waschanlage bedenklich erscheinen ließen.

Als Belüftungseinrichtung können an sich verschiedene bekannte Einrichtungen Verwendung finden, wie sie etwa für die Flüssigkeitsbelüftung in größeren Kläranlagen, aber auch in der Gärungstechnik bekannt sind, wobei man immer danach trachten wird, eine möglichst feine Verteilung kleiner Luftbläschen im Waschwasser zu erzielen, um große aktive Oberflächen der Luftbläschen zu erhalten. Zu erwähnen ist noch, daß durch die Luftzufuhr vor und im Mikrofilter Schwingungen von Feststoffteilchen im Waschwasser angeregt werden, die sowohl das Zusammenwachsen zu größeren Teilchen als auch wegen der durch die Luft erzeugten Pumpbewegungen innerhalb der Leitung bzw. des Filters die mechanische Reinigung des Waschwassers erleichtern.

Um mit Hilfe platzsparender einfacher Einrichtungen eine für die vorliegenden Zwecke ausreichende und sogar an den jeweiligen Verschmutzungsgrad bzw. die Verschmutzungsart des Waschwassers anpaßbare Belüftung zu gewährleisten, wird eine Weiterbildung der Erfindung nach Anspruch 2 vorgesehen.

Auch bei dieser prinzipiellen Ausgestaltung der Belüftungseinrichtung sind verschiedene Varianten möglich. Man kann unter anderem die Zweigleitung über einen Injektor oder einen anderen Luftverteiler in die dann in diesem Bereich entsprechend zu erweiternde Förderleitung münden lassen, um eine intensive Durchmischung des Waschwassers mit feinperliger Luft zu gewährleisten.

Vorteilhaft ist eine Weiterbildung gemäß Anspruch 3.

Der Vorratsbehälter kann hier ganz oder teilweise mit einer Auskleidung, z. B. aus feinporösem Material, versehen sein, die die Luftperlenbildung im zugeführten Wasser begünstigt. Nach einer möglichen Betriebsart wird hier zunächst das Absperrorgan zur Druckluftleitung geschlossen, so daß die Pumpe das Waschwasser entweder über die Zweigleitung direkt oder bei entsprechend gestellten Absperrorganen zumindest über einen Teil des Mikrofilters und dessen Ablauf in den Vorratsbehälter drückt, wobei eine Durchmischung mit dem dort vorhandenen Luftvorrat stattfindet. Anschließend wird auf jeden Fall eine allenfalls vorhandene Verbindung mit dem Auslaß des Feinfilters unterbrochen und das Absperrorgan der Druckluftleitung wird geöffnet, wobei der eingestellte Luftdruck gleich oder etwas höher als der Förderdruck der Wasserpumpe ist. Dadurch findet eine weitere Durchmischung der Waschflüssigkeit im Vorratsbehälter mit der Druckluft statt und dieses Gemisch wird in weiterer Folge über die Zweigleitung in die Förderleitung gepreßt, wo es sich mit dem über die Pumpe zugeführten übrigen Waschwasser intensiv vermischt und in den Filter übertritt. Schließlich ist der Vorratsbehälter entleert, so daß dem Waschwasser direkt über die Zweigleitung Druckluft zugeführt wird. Je nach dem vorhandenen Verunreinigungsgrad des Waschwassers kann man hier vorsehen, daß entweder zumindest der größte Teil des Waschwassers im Vorratsbehälter mit Luft durchmischt wird oder die Hauptluftzufuhr nach Entleerung des Vorratsbehälters direkt über die Zweigleitung stattfindet. Diese Betriebsarten lassen sich über die von der übergeordneten Steuereinrichtung vorgebbaren Intervalle beim Öffnen und Schließen der verschiedenen Absperrorgane genau einstellen.

Weitere Einzelheiten und Vorteile des Erfindungsgegenstandes entnimmt man der nachfolgenden Zeichnungsbeschreibung.

In der Zeichnung ist der Erfindungsgegenstand beispielsweise veranschaulicht. Es zeigen
- Fig. 1: in vereinfachtem Blockschema eine erfindungsgemäße Anlage in der Gesamtanordnung und
- Fig. 2: als Detail eine mögliche Ausbildung der Verbindungen zwischen Belüftungseinrichtung und Mikrofilter.

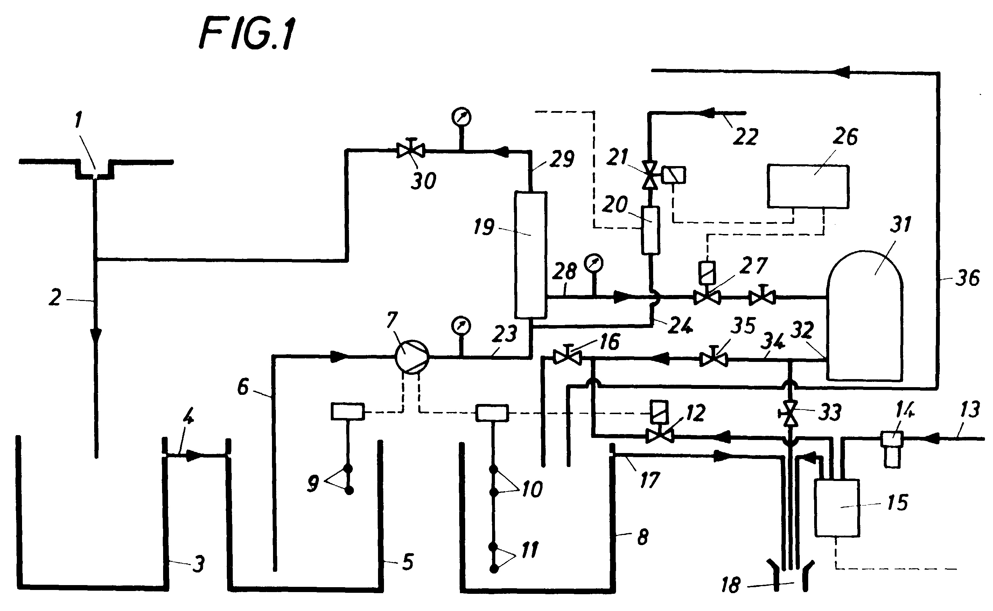

Nach Fig. 1 führt vom Ablauf 1 einer Fahrzeugwaschanlage eine entsprechende Leitung 2 in einen Ölabscheider 3 bekannter Bauart. Der Ablauf 4 des Ölabscheiders mündet oben in einem Absetzbehälter 5, der eine nicht dargestellte Entnahmeöffnung für abgesetzte Feststoffe aufweist und von dem eine Ansaugleitung 6 zu einer Förderpumpe 7 für das nun grob vorgereinigte Waschwasser führt. Für Reinwasser ist ein weiterer Vorratsbehälter 8 vorhanden. In den Behältern 5 und 8 sind Fühler 9, 10, 11 für die Niveauregelung vorhanden, die über entsprechende Steuereinrichtungen die Förderpumpe 7 und ein Ventil 12 in einer Frischwasserleitung 13 steuern.

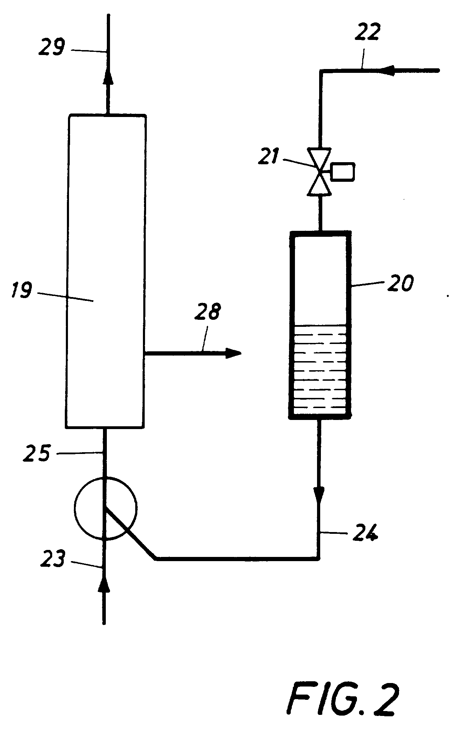

Diese Frischwasserleitung 13 führt über einen Filter 14 und eine Enthärtungsanlage 15 zum Ventil 12 und von da über ein weiteres Ventil 16 in den Reinwasserbehälter 8. Die Frischwasserzufuhr wird eingeschaltet um Wasserverluste auszugleichen. Der Ablauf der Enthärtungsanlage 15 und ein Überlauf 17 des Reinwasserbehälters 8 münden in einen Kanaleinlaß 18. Die Förderpumpe 7 fördert das grob vorgereinigte Waschwasser zu einer Belüftungseinrichtung, von der in Fig. 1 nur ein Vorratsbehälter 20, ein Lufteinlaßventil 21 und eine Druckluftleitung 22 dargestellt wurden. Im Detail mündet nach Fig. 2 in der von der Pumpe 7 kommenden Förderleitung 23 eine Zweigleitung 24 aus dem Vorratsbehälter 20. Ein nach der Vereinigungsstelle dieser Leitungen 23, 24 liegender Auslaß 25 führt zu einem Mikrofilter 19. Eine übergeordnete Steuereinrichtung 26 steuert das Lufteinlaßventil 21 und ein Absperrorgan 27 in einer aus dem Mikrofilter 19 führenden Reinwasserleitung 28, wobei diese Reinwasserleitung 28 im Bedarfsfall über ein weiteres Absperrorgan auch mit dem Vorratsbehälter 20 verbunden sein kann. Durch entsprechende intermittierende Steuerung des Lufteinlaßventiles 21 und des Absperrorganes 27 wird das über 24 und/oder 28 zugeführte Waschwasser im Vorratsbehälter oder erst im Bereich der Abzweigstelle von der Waschwasserleitung 23 mit Druckluft in der beschriebenen Weise vermischt und über den Mikrofilter 19 geführt. Das Filterkonzentrat wird über eine Leitung 29 und ein entsprechendes Absperrorgan 30 in die zum Ölabscheider 3 führende Leitung zurückgeführt. Das Reinwasser wird über die Reinwasserleitung 28 und das Absperrorgan 27 zu einem Kohlefilter 31 geführt, wobei am Auslaß dieses Kohlefilters 31 überschüssiges Wasser über ein Absperrorgan 33 in den Kanaleinlaß 18 abgeleitet, das übrige Reinwasser aber über eine Leitung 34 und die Absperrorgane 35 und 16 in den Reinwasserbehälter 8 geführt wird. Vom Reinwasserbehälter 8 führt eine Leitung 36 zur Waschanlage zurück, in der das aufbereitete Wasser neuerlich Verwendung finden kann.

## Patentansprüche

1. Anlage zur Reinigung von Waschwasser, insbesondere bei Fahrzeugwaschanlagen, mit einem Ölabscheider (3) und einer Abscheidevorrichtung (19 - 36) für Feststoffe, dadurch gekennzeichnet, daß die Abscheidevorrichtung für die Feststoffe eine über eine Pumpe (7) mit dem grob vorgereinigten Waschwasser beschickbare, aus einem Vorratsbehälter (20), einem Lufteinlaßventil (21) und einer Druckluftleitung (22) bestehende Einrichtung zur Belüftung unter Überdruck aufweist, deren Auslaß (25) in einen Mikrofilter (19) führt, dessen Wasserauslaß (28) über einen Kohlefilter (31) mit einem Vorratsbehälter (8) für Reinwasser verbunden ist, wogegen der Auslaß (29) für das Filterkonzentrat zum Ölabscheider (3) zurückführt.

2. Anlage nach Anspruch 1, dadurch gekennzeichnet, daß die Belüftungseinrichtung (20, 21, 22, 24, 25) eine in die von der Pumpe (7) zum Mikrofilter (19) führende Förderleitung (23) mündende Zweigleitung (24) aufweist, die von einem Vorratsbehälter (20) aus mit Druckluft und/oder einem Druckluft-Wassergemisch beschickbar ist, so daß sich die Luft in dem zum Mikrofilter führenden Teil (25) der Förderleitung (23) und im Mikrofilter innig mit dem von der Pumpe zugeführten, vorgereinigten Waschwasser vermischt.

3. Anlage nach den Ansprüchen 1 und 2, dadurch gekennzeichnet, daß ein an die Zweigleitung (24) anschließender Vorratsbehälter (20) über Absperrorgane (21) mit einer Druckluftleitung (22) und gegebenenfalls dem Reinwasserauslaß (28) des Mikrofilters (19) verbindbar ist, wobei vorzugsweise das Absperrorgan (21) der Druckluftleitung von einer übergeordneten Steuereinrichtung (26) der Anlage in einstellbaren Intervallen im Örfnungs bzw. Schließsinn betätigbar ist.

## Claims

1. An installation for cleaning wash water, more particularly in vehicle washing installations, comprising an oil separator (3) and a separating device (19 - 36) for solids, characterised in that the separating device for the solids comprises a means for aerating under overpressure, said means being adapted to be fed with the roughly pre-cleaned wash water via a pump (7), and consisting of a reservoir (20), an air inlet valve (21) and a compressed air conduit (22), the outlet (25) of said means leading to a microfilter (19), the water outlet (28) of which is connected via a charcoal filter (31) to a reservoir (8) for clean water, whereas the outlet (29) for the filter concentrate leads back to the oil separator (3).

2. An installation according to claim 1, characterised in that the aerating means (20, 21, 22, 24, 25) comprises a branch conduit (24) leading into the feed conduit (23) extending from the pump (7) to the microfilter (19), said branch conduit (24) being adapted to be fed with compressed air and/or a mixture of compressed air and water from a reservoir (20), so that the air in the part (25) of the feed conduit (23) leading to the microfilter, and in the microfilter itself, mixes intimately with the pre-cleaned wash water supplied by the pump.

3. An installation according to claims 1 and 2, characterised in that a reservoir (20) connected to the branch conduit (24) is adapted to be connected via shut-off means (21) to a compressed air conduit (22) and, if required, to the clean water outlet (28) of the microfilter (19), the shut-off means (21) in the compressed air conduit preferably being adapted to be actuated for opening and closing at adjustable intervals by an overriding control means (26) of the installation.

## Revendications

1. Installation pour la purification d'eau de lavage, en particulier pour des installations de lavage de véhicules, avec un séparateur à huile (3) et un dispositif séparateur (19 à 36) pour les solides, caractérisée en ce que le dispositif séparateur destiné aux solides présente un dispositif d'aération sous pression, pouvant être alimenté, par l'intermédiaire d'une pompe (7), avec l'eau de lavage ayant subi une pré-épuration grossière, constitué d'un réservoir de stockage (20), d'une soupape d'admission d'air (21) et d'une conduite d'air comprimé (22), dispositif d'aération dont la sortie (25) conduit à un microfiltre (19) dont la sortie d'eau (28) est reliée, par l'intermédiaire d'un filtre à charbon (31), à un récipient de stockage (8) pour l'eau purifiée, alors que, par contre, la sortie (29), destinée au concentrat de filtre, est retournée au séparateur à huile (3)..

2. Installation selon la revendication 1, caractérisée en ce que le dispositif d'aération (20, 21, 22, 24, 25) présente une conduite de ramification (24) débouchant dans une conduite de transfert (23) conduisant de la pompe (7) au microfiltre (19), conduite de ramification pouvant être alimentée depuis un récipient de stockage (20) en air comprimé et/ou en un mélange air comprimé-eau, de manière que l'air se trouvant dans la partie (25), conduisant au microfiltre, de la conduite de transfert (23) et dans le microfiltre soit mélangé intimement à l'eau de lavage pré-purifiée, amenée par la pompe.

3. Installation selon les revendications 1 et 2, caractérisée en ce qu'un récipient de stockage (20) raccordé à la conduite de ramification (24) est susceptible d'être relié, par l'intermédiaire d'organes d'isolement (21), à une conduite d'air comprimé (22), et, le cas échéant, à la sortie d'eau purifiée (28) du microfiltre (19), où, de préférence, l'organe d'isolement (21) de la conduite d'air comprimé peut être actionné dans le sens de l'ouverture ou de la fermeture, à intervalles de temps réglables, par un dispositif de commande (26) de l'installation, dispositif placé à un niveau hiérarchiquement supérieur.
